# EUROPÄISCHE PATENTSCHRIFT

(11) **EP 2 022 707 B1**
(45) Veröffentlichungstag und Bekanntmachung des Hinweises auf die Patenterteilung: **02.12.2009**
(21) Anmeldenummer: 07015777.1
(22) Anmeldetag: 10.08.2007
(51) Int. Cl.: B62D 25/24, B60R 13/08, B62D 29/00

(54) **Verschlussstopfen**
Stopper
Bouchon de fermeture

(43) Veröffentlichungstag der Anmeldung: 11.02.2009
(73) Patentinhaber: Henkel AG & Co. KGaA, 40589 Düsseldorf (DE)
(72) Erfinder: Kochert, Stefan, 68799 Reilingen (DE)

(56) Entgegenhaltungen:
- EP-A- 0 733 558
- EP-A- 1 375 308
- DE-A1- 10 303 366

## Beschreibung

Die vorliegende Erfindung betrifft Verschlussstopfen zum Abdichten und schalldämpfenden Verschließen eines Loches in einem Bauteil aus flächigem Material, vorzugsweise aus Blech oder Kunststoff sowie ein Verfahren zu deren Herstellung.

Bei der Herstellung von Karosserien im Automobilbau entsteht eine Reihe von Öffnungen oder Löchern als Hilfe zur Montage und Befestigung von Karosseriebauteilen. Weitere Öffnungen dienen dem ungehinderten Durchfluss von Prozessflüssigkeiten in der Fertigung des Fahrzeuges wie Entfettungsmittel, Phosphatierungsmittel und KTL-Beschichtungsmaterial, damit diese Flüssigkeiten durch die Hohlräume und Säulen der Fahrzeugkarosserie fließen können und die Innenwände dieser Hohlraumelemente vollständig benetzen können. Am Ende müssen die genannten Öffnungen oder Löcher mit einem Stopfen verschlossen werden. Dabei müssen die Stopfen so beschaffen sein, dass sie die Öffnungen oder Löcher sicher abdichten, so dass Schmutz und Feuchtigkeit nicht von der einen Seite des Bleches auf die andere gelangt. Innerhalb der Karosseriehohlräume eingeschlossene Feuchtigkeit kann zu Korrosion führen. Da derartige Löcher auch so genannte Schallbrücken bilden, wird angestrebt, die Stopfen so auszuführen, dass sie auch schalldämpfend wirken.

Es ist eine große Reihe verschieden strukturierter Lochstopfen bekannt geworden. US 4 290 536 A beschreibt einen Verschluss zum dichten Verschließen von Löchern. Öffnungen und Durchbrüchen in Platten. Der Verschluss weist eine Umfangrille und eine Einrichtung zum Aufdrücken der Rille gegen die zu verschließende Platte sowie ein thermisch schmelzendes Material auf. Dabei soll letzteres insbesondere einen Umfangsstreifen aufweisen, der zusammendrückbar und schmelzbar zwischen der Rille und der Platte angeordnet ist. Beim Verschließen soll das thermisch schmelzende Material zwischen Verschluss und Platte zusammengedrückt werden, so dass nach dem Abkühlen der Verschluss perfekt mit der Platte über dem Loch verbunden ist.

DE 102 53 983 A offenbart einen Verschlussstopfen zum dichten und schalldämpfenden Verschließen eines Loches in einem Bauteil aus Flachmaterial, vorzugsweise Blech oder Kunststoff, mit einem Schaft, der im Dichtsitz in die Öffnung einsetzbar ist, und einem einteilig mit dem einen Ende des Schaftes aus elastisch nachgebendem Material geformten radialen Flansch, wobei der Flansch einen radialen äußeren schrägen oder gewölbten Abschnitt aufweist, der sich unter Verformung dichtend gegen die zugekehrte Fläche des Bauteils anlegt, wenn der Schaft in das Loch eingedrückt wird. Der Schaft soll durch einen mit der Wandung des Loches zusammenwirkenden Hinterschnitt in dem Loch gehalten werden, wobei der Schaft im Bereich des Dichtsitzes einen Dichtabschnitt mit im entspannten Zustand glatter konischer Außenfläche aufweist, deren zum Flansch hin größer werdender Durchmesser zumindest im Bereich des Dichtsitzes größer als der Durchmesser des Loches ist. Auf der Innenseite der Verbindung von Flansch und Schaft ist ein axialer Freiraum vorgesehen, der sich zum anderen Ende des Schaftes hin bis in Höhe des Dichtsitzes oder darüber hinaus erstreckt. Unterhalb des Flansches bildet er einen ringförmigen Schaftabschnitt, wodurch das Material des ringförmigen Schaftabschnittes in den Freiraum hineinverformt wird, wenn der Schaft in das Loch eingedrückt und die Lochwandung eine den Hinterschnitt bildende Nut in den Ringabschnitt formt.

WO 2004/011320 A beschreibt ein Verfahren zum Abdichten, Schalldämmen und Verstärken von Öffnungen in Bauteilen, insbesondere einer Automobilkarosserie, sowie ein hierfür geeignetes stopfenförmiges Bauteil. Dieses stopfenförmige Bauteil umfasst einen Träger mit einem auf dem flanschartigen Umfangsbereich angeordneten expandierbaren Material. Der Träger ist mit einem Befestigungsmittel verbunden, das einen flexiblen Abschnitt und mindestens einen lang gestreckten Teilbereich aufweist. Durch diese Anordnung soll der Stopfen geeignet sein, in eine Öffnung des Karosserieteiles unter Krafteinwirkung gesteckt zu werden, wobei das Befestigungsmittel durch die Öffnung ragt und beeinträchtigungsfrei mit dem Karosserieteil verbunden ist. Nach der thermischen Expansion des expandierbaren Materials bewirkt dieses einen Verbund zwischen Stopfenträger und Karosserieteil.

DE 10303336 A1 offenbart ein Verfahren zum Verschließen einer Öffnung, vorzugsweise einer Öffnung in einem Karosserieblech, bei dem man einen Stopfen in die Öffnung eindrückt, um diese zu verschließen, wobei der Stopfen wenigstens eine Dichtung aus einem expandierbaren Material umfasst und der Stopfen in die Öffnung mit nicht expandierter Dichtung eingedrückt und erst danach die Dichtung zum Expandieren gebracht wird und dadurch die Öffnung verschlossen wird.

Die bekannten Lochstopfen erweisen sich im Wesentlichen in ihrer Funktion als zufrieden stellend. Bei Löchern mit ausreichendem Durchmesser sind derartige Stopfen verhältnismäßig leicht einsetzbar, auch von Hand. Der Einsatz der Stopfen erfolgt üblicherweise jedoch erst im Lackbereich (am KTL-beschichteten Rohbau), so dass die Korrosionsbeständigkeit der Lochkante kein Problem darstellt. Erheblicher Verbesserungsbedarf besteht darin, im Rohbau einen Stopfen für jene Löcher einzusetzen, die im Lackbereich nicht mehr zugänglich sind. Dieser Stopfen muss zusätzlich zur Sicherstellung der Dichtigkeit der mit den Stopfen verschlossenen Öffnungen unter allen vorkommenden Montagebedingungen so beschaffen sein, dass keine Korrosion an der Lochkante auftritt.

Angesichts dieses Standes der Technik haben sich die Erfinder die Aufgabe gestellt, Verschlussstopfen mit verlässlich abdichtender und akustisch wirksamer Funktion bereitzustellen, die vorzugsweise im Spritzgussverfahren kostengünstig herstellbar sind und zudem eine KTL-Beschichtung der Lochkante sicherstellen sowie die Lochkante anschließend vollständig einschäumen.

Die erfindungsgemäße Lösung der Aufgabe ist den Patentansprüchen zu entnehmen. Sie besteht im wesentlichen in der Bereitstellung von Verschlussstopfen (1) zum Abdichten und schalldämpfenden Verschließen eines Loches in einem Bauteil aus flächigem Material, vorzugsweise aus Blech oder Kunststoff, umfassend ein Stopfenoberteil (2), ein Unterteil (4) sowie ein Oberteil und Unterteil verbindendes Verbindungselement (3), wobei das Unterteil einen geringfügigeren wirksamen Durchmesser als das Oberteil hat und wobei das Unterteil ein im wesentlichen planares, zur Ebene des Oberteils parallel angeordnetes Mittelteil (5) aufweist, gekennzeichnet durch die folgenden wesentlichen Merkmale:
a) an dem Mittelteil (5) sind in Richtung Oberteil abgewinkelte Verbindungsstücke (6) angeordnet und an der dem Oberteil zugewandten Kante sind zum Oberteil parallel ausgerichtete Tragplatten (7) integral angeformt, deren freie Kante (8) in Richtung Mittenachse (M, M') des Stopfens weist,
b) auf den Tragplatten (7) sowie auf den Flanken (11) des Verbindungselements (3) ist eine Dichtung aus thermisch expandierbaren Material (9) aufgebracht.

Ein weiterer Gegenstand der vorliegenden Erfindung richtet sich auf ein Verfahren zur Herstellung des vorgenannten Verschlussstopfens mit den folgenden wesentlichen Verfahrensschritten:
(a) Injektion des thermoplastischen Werkstoffs für den Träger in die Spritzguss-Form,
(b) Entformen des Trägers,
(c) nachfolgende Injektion des thermisch expandierbaren Materials auf die Tragplatten, das Verbindungselement unter Ausbildung der Verbindungsstränge in einer zweiten Spritzguss-Form,
(d) Entformen des Verschlussstopfens.

In einer bevorzugten Ausführungsform ist der Verbund des Verschlussstopfens aus Oberteil, Tragplatten, Verbindungsstücken als einstückiger Träger ausgebildet.

Das Trägermaterial ist dabei vorzugsweise aus thermoplastischen Kunststoffen geformt, wobei die thermoplastischen Kunststoffe gegebenenfalls faserverstärkt und / oder mit Füllstoffen versehen sein können. Der thermoplastische Kunststoff muss dabei einen Schmelz- oder Erweichungspunkt aufweisen, der oberhalb der Expansionstemperatur des thermisch expandierbaren Materials liegt. Bevorzugte thermoplastische Kunststoffe sind dabei Polyamide, Polyimide, Polyoxypropylen oder Polyethylenterephthalat, ganz besonders bevorzugt ist Polyamid 6.

Vorzugsweise ist der wirksame Kreis des Unterteils in der Art geringfügig größer ist als der Innendurchmesser des zu verschließenden Loches, dass sich das Unterteil unter elastischem Verbiegen der Verbindungsstücke (6) in das Loch eindrücken lässt, vorzugsweise so weit, dass vorhandene Einkerbungen (10) in dem expandierbaren Material in den Rand des Loches einrasten und durch die Federwirkung der elastischen Verbindungsstücke (6) festgehalten werden. Als "wirksamer Kreis" ist der Kreis zu verstehen, der sämtliche Bereiche der Projektion des Unterteils auf eine Ebene einschließt. Der wirksame Kreis des Unterteils richtet sich dabei selbstverständlich nach dem Innendurchmesser des zu verschließenden Loches. Er liegt in bevorzugten Ausführungsformen zwischen 20 und 40 mm, der Außendurchmesser des Oberteils liegt dabei zwischen 30 und 50 mm.

Die bevorzugte einstückige Ausführungsform des Trägers für den Verschlussstopfen ist dabei so ausgebildet, dass die auf den Tragplatten und den Flanken des Verbindungselementes aufzubringende Dichtung aus thermisch expandierbarem Material in einem einzigen Spritzgussvorgang injizierbar ist.

Der Expansions- und Aushärtebereich des thermisch expandierbaren Materials liegt dabei bei Temperaturen zwischen 140 °C und 220 °C, vorzugsweise zwischen 150 °C und 180 °C, so dass für die Expansion und Aushärtung dieses Materials die Prozesswärme der Öfen zur Aushärtung der kathodischen Tauchlackierung (KTL bzw. E-coat) ausgenutzt werden kann um die Expansion der Dichtung aus dem thermisch expandierbaren Material auszulösen, um somit das Loch in dem Bauteil der Fahrzeugkarosserie vollständig abzudichten.

Geeignete polymere Basisbindemittel für das thermisch expandierbare Material sind beispielsweise Ethylenvinylacetat-Copolymere (EVA), Copolymere des Ethylens mit (Meth)-acrylatestern, die gegebenenfalls noch anteilig (Meth)acrylsäure einpolymerisiert enthalten, statistische oder Blockcopolymere des Styrols mit Butadien oder Isopren oder deren Hydrierungsprodukte. Letztere können auch Triblockcopolymere vom Typ SBS, SIS oder deren Hydrierungsprodukte SEBS oder SEPS sein. Es können auch Mischungen der vorgenannten (Co)polymeren als Bindemittel eingesetzt werden. Zusätzlich können die Bindemittel noch Vernetzer, Haftvermittler, klebrigmachende Harze ("tackifier"), Weichmacher sowie weitere Hilfs- und Zusatzstoffe wie z. B. niedermolekulare Oligomere enthalten. Zur Erzielung einer ausreichenden Treibfähigkeit und Expansionsfähigkeit enthalten diese polymeren Bindemittel noch Treibmittel. Als Treibmittel eignen sich im Prinzip alle bekannten Treibmittel wie z. B. die "chemischen Treibmittel" die durch Zersetzung Gase freisetzen oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid. Beispiele für die physikalischen Treibmittel sind expandierbare Kunststoffmikrohohlkugeln auf der Basis von Polyvinylidenchloridcopolymeren oder Acrylnitril/- (Meth)acrylat-Copolymeren, wie sie z.B. unter den Namen "Dualite" bzw. "Expancel" von den Firmen Pierce & Stevens bzw. Casco Nobel im Handel erhältlich sind.

Einige besonders bevorzugte Ausführungsformen der Erfindung sollen nun anhand der Zeichnungen näher erläutert werden.

Es zeigen im einzelnen:
- Figur 1: eine perspektivische Aufsicht des erfindungsgemäßen Verschluss- stopfens auf dessen Unterseite
- Figur 2: eine halbperspektivische seitliche Ansicht des erfindungsgemäßen Verschlussstopfens
- Figur 3: eine seitliche Ansicht des erfindungsgemäßen Verschlussstopfens
- Figur 4: eine schematische Darstellung des Verschließens eines Karosserie- bauteils.

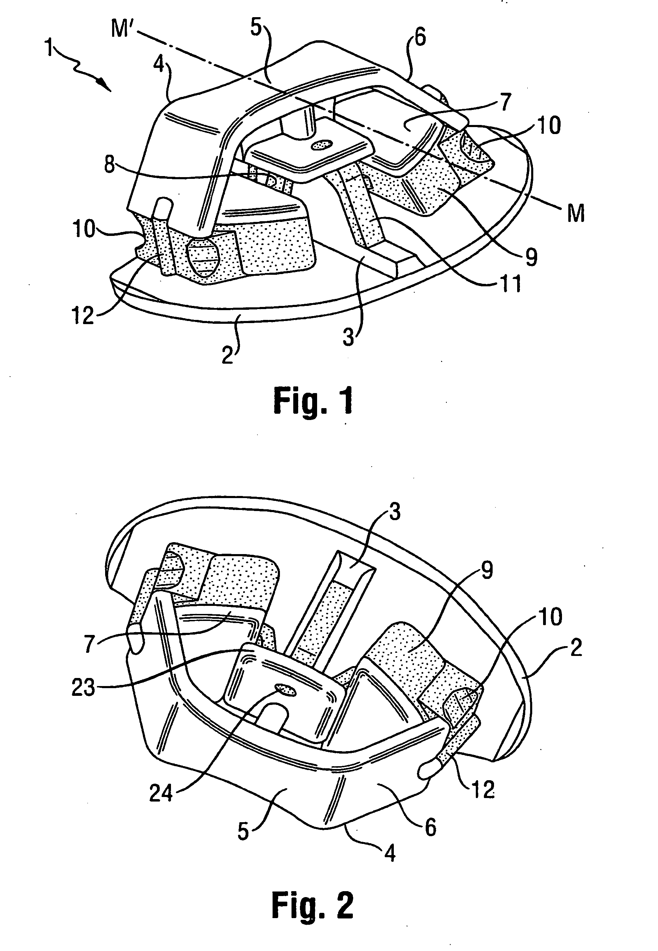

**Figur 1** zeigt eine Aufsicht auf die Unterseite des Verschlussstopfens (1) mit dem Stopfenoberteil (2), dem senkrecht auf dem Stopfenoberteil in Richtung der Mittelachse (M, M') angebrachten Verbindungselement (3) zu dem Stopfenunterteil (4). Dieses Stopfenunterteil (4) ist senkrecht zum Verbindungselement (3) integral an diesem angeformt. Das zentrale Mittelteil (5) ist dabei im wesentlichen parallel zu dem Stopfenoberteil ausgerichtet. Beidseitig schließt sich an das Mittelteil parallel zur Mittelachse jeweils ein abgewinkeltes Verbindungsstück (6) an, das in Richtung auf die Unterseite des Stopfenoberteils weist. An der Unterkante der beiden abgewinkelten Verbindungsstücke sind die Tragplatten (7) angeformt, die in Richtung auf die Mittelachse (M, M') des Verschlussstopfens weisen. Dabei sind die freien Kanten (8) der Tragplatten (7) parallel zur Mittelachse und zu dem Verbindungselement (3) angeordnet. Auf den der Unterseite des Stopfenoberteils zugewandten Flächen der Tragplatten (7) sowie den auswärts gerichteten Flanken (11) des Stopfenträgers ist die Dichtung (9) aus dem thermisch expandierbaren Material aufgebracht. Die Dichtung (9) weist in den Eckbereichen Einkerbungen (10) sowie im mittigen Bereich unterhalb der Tragflächen (7) Vorsprünge (12) auf.

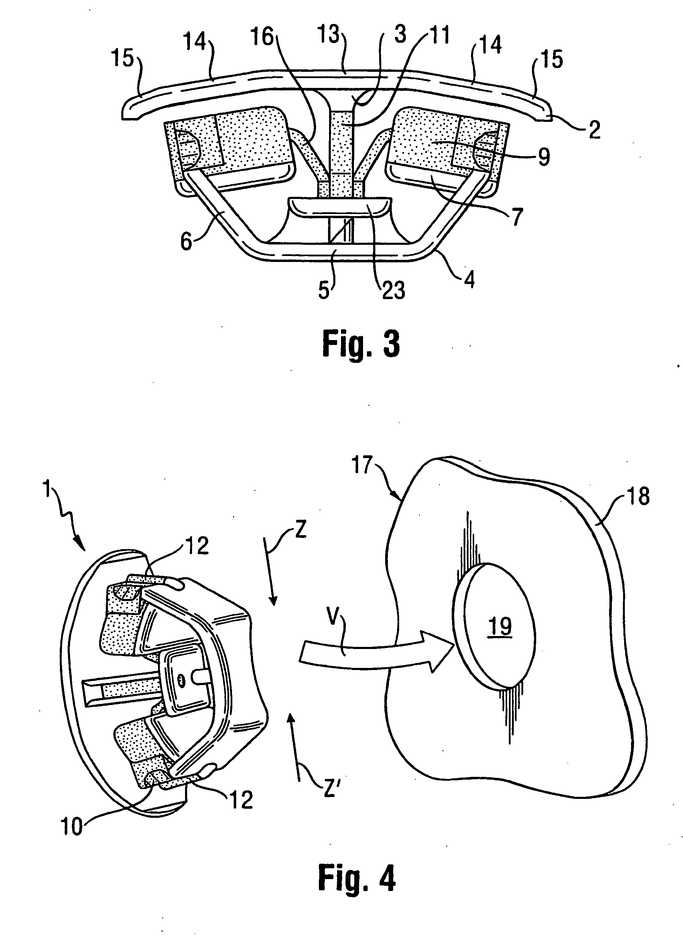

**Figur 2** zeigt eine halbperspektivische seitliche Ansicht des erfindungsgemäßen Verschlussstopfens gemäß Figur 1. Sichtbar sind hier wiederum der Träger des Verschlussstopfens bestehend aus Stopfenoberteil (2), Verbindungselement (3), Stopfenunterteil (4) mit Mittelteil (5), abgewinkelten Verbindungsstücken (6) sowie daran angeformten Tragplatten (7). Zusätzlich ist hier die Mittelplatte (23) sichtbar, die senkrecht auf dem Verbindungselement (3) zwischen Mittelteil (5) und Stopfenoberteil (2) parallel zu diesen angeordnet ist. In dieser Mittelplatte (23) ist eine Bohrung (24) sichtbar, die als Injektionsöffnung zum Einspritzen des Dichtungsmaterials (9) während des Spritzgussvorganges dient. Weiterhin sind wiederum die Einkerbungen (10) sowie Vorsprünge (12) des thermisch expandierbaren Dichtungsmaterials sichtbar. Auf die Funktion der Vorsprünge (12) und Einkerbungen (10) wird weiter unten bei der Erläuterung der Figur 4 eingegangen werden.

**Figur 3** zeigt eine seitliche Ansicht der bevorzugten Ausführung des erfindungsgemäßen Verschlussstopfens gemäß Figur 1 und 2. Diese Ansicht ist senkrecht zur Mittelachse (M, M') vorgenommen. Aus dieser Darstellung wird sichtbar, dass das Stopfenoberteil (2) vorzugsweise keine planare Anordnung aufweist, sondern eine planare Mittelfläche (13) im Bereich der Mittelachse hat, woran sich abgewinkelte Zwischenflächen (14) sowie abgewinkelte Randbereiche (15) anschließen. Dabei können die Kanten der abgewinkelten Zwischenflächen (14) und Randbereichsflächen (15) im wesentlichen parallel zur Mittelachse angeordnet sein. Es ist jedoch auch denkbar, dass diese Kanten konzentrische Kreise oder Polygone um den Mittelpunkt des Stopfenoberteils bilden. In Richtung der Mittelachse ist senkrecht zur Mittelfläche (13) das Verbindungselement (3) in Richtung Stopfenunterteil sichtbar. Das Stopfenunterteil bestehend aus der Mittelplatte (23) des Verbindungselementes, dem planaren Mittelteil (5), den abgewinkelten Verbindungsstücken (6) und den Tragplatten (7) ist hier ebenfalls dargestelit. Weiterhin sichtbar ist die auf den Tragplatten (7), den Flanken des Verbindungselements (3) sowie der Mittelplatte (23) aufgebrachte Dichtung (9). Zusätzlich sind in dieser Abbildung die Verbindungsstränge (16) der Dichtung (9) sichtbar, die den Flankenbereich (11) sowie den auf den Tragplatten (7) und der Mittelplatte (23) aufgebrachten Teil des Dichtungsmaterials miteinander verbinden. Durch diese Anordnung ist sichergestellt, dass durch die einzige Injektionsbohrung (24) das Dichtungsmaterial während des Spritzgussvorganges in alle vorgesehenen Bereiche gelangen kann.

**Figur 4** stellt in schematischer Weise den Verschließvorgang eines Karosseriebauteils dar. Angedeutet ist im rechten Teil dieser Figur das abzudichtende Bauteil (17) mit dem Blechteil (18) und dem zu verschließenden Loch (19) des Karosseriebauteils. Zum Verschließen wird der Stopfen (1) in Richtung des Pfeiles (V) in das Loch (19) gedrückt. Dabei wird das Stopfenunterteil in Richtung der Pfeile (Z, Z') in Richtung der Mittelachse etwas komprimiert. Begünstigt wird dies durch die rückfedemde Wirkung der abgewinkelten Verbindungsstücke (6) sowie der Verbindungsstränge (16). Die Einkerbungen (10) bewirken dabei ein "Einrasten" des Stopfens in dem Karosseriebauteil (17) und sorgen somit für eine mechanische Fixierung des Stopfens in dem zu verschließenden Loch (19). Die Vorsprünge (12) stellen dabei gleichzeitig sicher, dass zu diesem Zeitpunkt, zu dem das Dichtungsmaterial noch nicht thermisch expandiert ist, keine vollflächige Berührung des Dichtungsmaterials (9) mit den Kanten des Blechteils in der Bohrung stattfindet. Hierdurch wird gewährleistet, dass vor der Expansion des Dichtungsmaterials sämtliche metallischen Bereiche des Bauteils (17) vollflächig mit den Prozessflüssigkeiten benetzt werden können. Damit ist sichergestellt, dass auch die Kantenbereiche von Bohrungen (19) sicher vor Korrosion geschützt werden können. Die thermische Expansion und Aushärtung des Dichtungsmaterials (9) erfolgt erstmalig im KTL-Ofen bei Temperaturen zwischen 140 °C und 220 °C.

Durch den vorstehend beschriebenen "Rastmechanismus" eignet sich der erfindungsgemäße Verschlussstopfen für den Verbau in allen im Fahrzeugbau vorkommenden Lagen (senkrechte Anordnung, "Überkopfanordnung", waagerechte Anordnung ...). Da die thermisch expandierende Dichtung einen hohen Expansionsgrad aufweist, ist eine vollständige und sichere Abdichtung unabhängig von der Einbaulage gewährleistet. Die erfindungsgemäßen Verschlussstopfen weisen eine hohe Kälteschlagzähigkeit im Gesamtverbund auf. Es wird kein Sprödbruch bei schlagartiger Beanspruchung beobachtet. Außerdem treten keinerlei Ermüdungserscheinungen oder Haftverluste nach Vibrationsbelastung auf. Die Verschlussstopfen eignen sich für alle im Karosseriebau vorkommenden Blechstärken (0,5 bis 6 mm) und Toleranzen und dichten gegen Wasser, Staub, Luft bzw. Gas und Schall in beiden Richtungen die Bauteile dauerhaft ab.

### Bezugszeichenliste

- 1: Verschlussstopfen
- 2: Stopfenoberteil
- 3: Verbindungselement
- 4: Stopfenunterteil
- 5: Mittelteil
- 6: abgewinkelte Verbindungsstücke
- 7: Tragplatten
- 8: freie Kante der Tragplatten
- 9: Dichtung aus thermisch expandierbaren Material
- 10: Einkerbungen in expandierbarem Material
- 11: auf den Flanken aufgebrachte Dichtung aus thermisch expandierbaren Material
- 12: Vorsprünge in expandierbarem Material
- 13: Mittelfläche des Stopfenoberteils
- 14: abgewinkelte Zwischenflächen des Stopfenoberteils
- 15: abgewinkelte Randbereiche des Stopfenoberteils
- 16: Verbindungsstränge der Dichtung
- 17: abzudichtendes Bauteil
- 18: Blechteil des zu verschließenden Bauteils
- 19: zu verschließendes Loch des Bauteils
- 23: Mittelplatte des Verbindungselements
- 24: Injektionsbohrung für Dichtungsmaterial
- M, M': Mittenachse des Stopfens

## Patentansprüche

1. Verschlussstopfen (1) zum Abdichten und schalldämpfenden Verschließen eines Loches in einem Bauteil aus flächigem Material, vorzugsweise aus Blech oder Kunststoff, umfassend ein Stopfenoberteil (2), ein Unterteil (4) sowie ein Oberteil und Unterteil verbindendes Verbindungselement (3), wobei das Unterteil einen geringfügigeren wirksamen Durchmesser als das Oberteil hat und wobei das Unterteil ein im wesentlichen planares, zur Ebene des Oberteils parallel angeordnete Mittelteil (5) aufweist, **gekennzeichnet durch** die folgenden wesentlichen Merkmale:
a) an dem Mittelteil (5) sind in Richtung Oberteil abgewinkelte Verbindungsstücke (6) angeordnet und an der dem Oberteil zugewandten Kante sind zum Oberteil parallel ausgerichtete Tragplatten (7) integral angeformt, deren freie Kante (8) in Richtung Mittenachse (M, M') des Stopfens weist,
b) auf den Tragplatten (7) sowie auf den Flanken (11) des Verbindungselements (3) ist eine Dichtung aus thermisch expandierbaren Material (9) aufgebracht.

2. Verschlussstopfen nach Anspruch 1, **dadurch gekennzeichnet, dass** das thermisch expandierbare Material (9) an seinem Außenrand Einkerbungen (10) aufweist, wodurch der wirksame Außenrand des Unterteils im wesentlichen kreisförmig ausgebildet ist.

3. Verschlussstopfen nach Anspruch 2, **dadurch gekennzeichnet, dass** der wirksame Kreis des Unterteils in der Art geringfügig größer ist als der Innendurchmesser des zu verschließenden Loches, dass sich das Unterteil unter elastischem Verbiegen der Verbindungsstücke (6) in das Loch eindrücken lässt.

4. Verschlussstopfen nach Anspruch 2 oder 3, **dadurch gekennzeichnet, dass** der wirksame Kreis des Unterteils zwischen 20 und 40 mm liegt.

5. Verschlussstopfen nach einem oder mehreren der Ansprüche 1 bis 4, **dadurch gekennzeichnet, dass** der Außendurchmesser des Oberteils größer als der Innendurchmesser des zu verschließenden Loches ist.

6. Verschlussstopfen nach einem oder mehreren der Ansprüche 1 bis 5, **dadurch gekennzeichnet, dass** der Außendurchmesser des Oberteils zwischen 30 und 50 mm liegt

7. Verschlussstopfen nach einem oder mehreren der Ansprüche 1 bis 6, **dadurch gekennzeichnet, dass** das thermisch expandierbare Material (9) zusätzlich Vorsprünge (12) aufweist.

8. Verschlussstopfen nach einem oder mehreren der Ansprüche 1 bis 7, **dadurch gekennzeichnet, dass** das thermisch expandierbare Material (9) hauptsächlich in radialer Richtung und nur in untergeordnetem Maße in axialer Richtung expandiert.

9. Verschlussstopfen nach einem oder mehreren der Ansprüche 1 bis 8, **dadurch gekennzeichnet, dass** das thermisch expandierbare Material (9) bei Temperaturen zwischen 140° C und 220° C, vorzugsweise zwischen 150° C und 180° C expandiert und aushärtet.

10. Verschlussstopfen nach einem oder mehreren der Ansprüche 1 bis 9, **dadurch gekennzeichnet, dass** der Verbund aus Tragplatten (7), Verbindungsstücken (6) und thermisch expandierbarem Material (9) bei Druck in Richtung Mittenachse (M, M) rückfedernde Wirkung aufweist.

11. Verschlussstopfen nach einem oder mehreren der Ansprüche 1 bis 10, **dadurch gekennzeichnet, dass** der Verbund aus Oberteil (2), Tragplatten (7), Verbindungsstücken (6) als einstückiger Träger ausgebildet ist und aus einem thermoplastischen Werkstoff besteht.

12. Verschlussstopfen nach Anspruch 11, **dadurch gekennzeichnet, dass** der thermoplastische Werkstoff ausgewählt wird aus Polyamiden, Polyimiden, Polyoxypropylen oder Polyethylenterephthalat.

13. Verschlussstopfen nach Anspruch 11 oder 12, **dadurch gekennzeichnet, dass** das Polyamid ein Polyamid 6 ist und ggf. mit Fasern und / oder Füllstoffen verstärkt ist.

14. Verschlussstopfen nach einem oder mehreren der Ansprüche 1 bis 13, **dadurch gekennzeichnet, dass** das thermisch expandierbare Material mindestens ein Ethylen- Copolymer, ein Treibmittel, ggf. ein klebrig machendes Harz oder einen Haftvermittler, ggf. ein zusätzliches Polymer oder Oligomer und ggf. ein Vernetzungsmittel enthält.

15. Verschlussstopfen nach einem oder mehreren der Ansprüche 1 bis 14 **dadurch gekennzeichnet, dass** nach der Expansion des thermisch expandierbaren Materials (9) die zu verschließende Öffnung (19) des Bauteils (17) vollständig abgedichtet ist.

16. Verfahren zur Herstellung des Verschlussstopfens nach einem oder mehreren der Ansprüche 1 bis 15, **gekennzeichnet durch** die folgenden wesentlichen Verfahrensschritte:
(e) Injektion des thermoplastischen Werkstoffs für den aus Stopfenoberteil (2), Verbindungselement (3), Stopfenunterteil (4), Mittelteil (5), Verbindungsstücken (6) und Tragplatten bestehendem Träger in eine Spritzguss-Form,
(f) Entformen des Trägers,
(g) nachfolgende Injektion des thermisch expandierbaren Materials auf die Tragplatten (7), das Verbindungselement (3) unter Ausbildung von Verbindungssträngen (16) in einer zweiten Spritzguss-Form, wobei die Verbindungsstränge den Flankenbereich (11) sowie den auf den Tragplatten und einer Mittelplatte (23) aufgebrachten Teil des Dichtungsmaterials verbinden,
(h) Entformen des Verschlussstopfens.

## Claims

1. Sealing plug (1) for sealing and sound deadening sealing of a hole in a component made of sheet material, preferably of sheet metal or plastic, comprising an upper part of a plug (2), a lower part (4) as well as a connecting element (3) connecting the upper part and lower part, wherein the lower part has a slightly lower effective diameter than the upper part, and wherein the lower part has an essentially planar midsection (5) that is arranged parallel to the upper part, **characterized by** the following significant features:
a) on the midsection (5) connecting pieces (6) angled in the direction of the upper part are arranged, and base plates (7) aligned parallel to the upper part are integrally molded on the edge facing the upper part, the free edge (8) of said base plates (7) pointing in the direction of the center axis (M, M') of the plug,
b) a seal made of thermally expandable material (9) is applied onto the base plates (7) as well as on the flanks (11) of the connecting element (3).

2. Sealing plug according to claim 1, wherein the thermally expandable material (9) has indentations (10) on its outer edge, with the result that the effective outer limit of the lower part is essentially circular in shape.

3. Sealing plug according to claim 2, wherein the effective circle of the lower part is slightly larger than the inner diameter of the hole to be sealed, such that the lower part can be pressed into the hole by elastically deforming the connecting pieces (6).

4. Sealing plug according to claim 2 or 3, wherein the effective circle of the lower part is between 20 and 40 mm.

5. Sealing plug according to one or more of claims 1 to 4, wherein the outer diameter of the upper part is greater than the inner diameter of the hole to be sealed.

6. Sealing plug according to one or more of claims 1 to 5, wherein the outer diameter of the upper part is between 30 and 50 mm.

7. Sealing plug according to one or more of claims 1 to 6, wherein the thermally expandable material (9) additionally possesses projections (12).

8. Sealing plug according to one or more of claims 1 to 7, wherein the thermally expandable material (9) expands mainly in the radial direction and only to a lesser extent in the axial direction.

9. Sealing plug according to one or more of claims 1 to 8, wherein the thermally expandable material (9) expands and cures at temperatures between 140 °C and 220 °C, preferably between 150 °C and 180 °C.

10. Sealing plug according to one or more of claims 1 to 9, wherein the composite made from base plates (7), connecting elements (6) and thermally expandable material (9) exhibits a resilient effect when pressed in the direction of the center axis (M, M').

11. Sealing plug according to one or more of claims 1 to 10, wherein the composite made of upper part (2), base plates (7), connecting pieces (6) is designed as a one-piece support and consists of a thermoplastic material.

12. Sealing plug according to claim 11, wherein the thermoplastic material is selected from polyamides, polyimides, polyoxypropylene or polyethylene terephthalate.

13. Sealing plug according to claim 11 or 12, wherein the polyamide is a polyamide 6 and is optionally reinforced with fibers and/or fillers.

14. Sealing plug according to one or more of claims 1 to 13, wherein the thermally expandable material comprises at least one ethylene copolymer, a blowing agent, optionally a tackifier resin or an adhesion promoter, optionally an additional polymer or oligomer and optionally a crosslinking agent.

15. Sealing plug according to one or more of claims 1 to 14, wherein the opening to be sealed (19) in the component (17) is completely sealed after the thermally expandable material (9) has expanded.

16. Process for manufacturing the sealing plug according to one or more of claims 1 to 15, comprising the following essential process steps:
(e) injection of the thermoplastic material for the support consisting of upper part of the plug (2), connecting element (3), lower part (4) of the plug, midsection (5), connecting pieces (6), and base plates into an injection mold,
(f) removing of the support from the mold,
(g) subsequent injection of the thermally expandable material onto the base plates (7), the connection element (3) so as to form connecting links (16) in a second injection mold, wherein the connecting links connect the flank region (11) as well as the part of the sealing material which is disposed on the base plates and the midsection,
(h) removing of the sealing plug from the mold.

## Revendications

1. Bouchon de fermeture (1) pour colmater et obturer de manière insonorisante un trou dans une pièce en matériau plat, de préférence en tôle ou en matériau synthétique, comprenant une partie supérieure (2) de bouchon, une partie inférieure (4) ainsi qu'un élément de raccordement (3) reliant la partie supérieure et la partie inférieure, la partie inférieure présentant un diamètre actif plus petit que la partie supérieure et la partie inférieure présentant une pièce centrale (5) essentiellement plane, disposée parallèlement au plan de la partie supérieure, **caractérisé par** les caractéristiques essentielles suivantes :
a) sur la partie centrale (5) sont disposées des pièces de raccordement (6) coudées vers la partie supérieure et sur le bord orienté vers la partie supérieure sont réalisées de manière intégrante des plaques support (7) orientées parallèlement par rapport à la partie supérieure dont le bord libre (8) est dirigé vers l'axe central (M, M') du bouchon,
b) sur les plaques support (7) ainsi que sur les flancs (11) de l'élément de raccordement (3) est disposé un joint en matériau (9) thermo-expansible.

2. Bouchon de fermeture selon la revendication 1, **caractérisé en ce que** le matériau (9) thermo-expansible présente sur son bord extérieur des entailles (10) suite à quoi le bord extérieur actif de la partie inférieure présente une réalisation essentiellement circulaire.

3. Bouchon de fermeture selon la revendication 2, **caractérisé en ce que** le cercle actif de la partie inférieure est légèrement supérieur au diamètre interne du trou à obturer de manière telle que la partie inférieure peut être enfoncée dans le trou sous une flexion élastique des pièces de raccordement (6).

4. Bouchon de fermeture selon la revendication 2 ou 3, **caractérisé en ce que** le cercle actif de la partie inférieure est situé entre 20 et 40 mm.

5. Bouchon de fermeture selon l'une ou plusieurs des revendications 1 à 4, **caractérisé en ce que** le diamètre extérieur de la partie supérieure est plus grand que le diamètre intérieur du trou à obturer.

6. Bouchon de fermeture selon l'une ou plusieurs des revendications 1 à 5, **caractérisé en ce que** le diamètre extérieur de la partie supérieure est situé entre 30 et 50 mm.

7. Bouchon de fermeture selon l'une ou plusieurs des revendications 1 à 6, **caractérisé en ce que** le matériau (9) thermo-expansible présente en outre des proéminences (12).

8. Bouchon de fermeture selon l'une ou plusieurs des revendications 1 à 7, **caractérisé en ce que** le matériau (9) thermo-expansible s'étend principalement dans le sens radial et seulement en moindre mesure dans le sens axial.

9. Bouchon de fermeture selon l'une ou plusieurs des revendications 1 à 8, **caractérisé en ce que** le matériau (9) thermo-expansible subit une expansion et durcit à des températures entre 140°C et 220°C, de préférence entre 150°C et 180°C.

10. Bouchon de fermeture selon l'une ou plusieurs des revendications 1 à 9, **caractérisé en ce que** l'assemblage des plaques support (7), des pièces de raccordement (6) et du matériau (9) thermo-expansible présente sous l'effet de la pression dans le sens de l'axe central (M, M') un effet de retour élastique.

11. Bouchon de fermeture selon l'une ou plusieurs des revendications 1 à 10, **caractérisé en ce que** l'assemblage de la partie supérieure (2), des plaques support (7), des pièces de raccordement (6) est réalisé sous forme de support en une seule pièce et est constitué par un matériau thermoplastique.

12. Bouchon de fermeture selon la revendication 11, **caractérisé en ce que** le matériau thermoplastique est choisi parmi les polyamides, les polyimides, le polyoxypropylène ou le poly(téréphtalate d'éthylène).

13. Bouchon de fermeture selon la revendication 11 ou 12, **caractérisé en ce que** le polyamide est un polyamide 6 et est le cas échéant renforcé par des fibres et/ou des charges.

14. Bouchon de fermeture selon l'une ou plusieurs des revendications 1 à 13, **caractérisé en ce que** le matériau thermo-expansible contient au moins un copolymère d'éthylène, un agent gonflant, le cas échéant une résine rendant adhésif ou un promoteur d'adhérence, le cas échéant un polymère ou un oligomère supplémentaire et le cas échéant un réticulant.

15. Bouchon de fermeture selon l'une ou plusieurs des revendications 1 à 14, **caractérisé en ce qu'**après l'expansion du matériau (9) thermo-expansible, l'ouverture (19) à obturer de la pièce de construction (17) est complètement colmatée.

16. Procédé pour la fabrication du bouchon de fermeture selon l'une ou plusieurs des revendications 1 à 15, **caractérisé par** les étapes de procédé essentielles suivantes :
(e) injection du matériau thermoplastique pour le support constitué par la partie supérieure (2) de bouchon, l'élément de raccordement (3), la partie inférieure (4) de bouchon, la partie centrale (5), les pièces de raccordement (6) et les plaques support dans un moule de moulage par injection,
(f) démoulage du support,
(g) injection consécutive du matériau thermo-expansible sur les plaques support (7), l'élément de raccordement (3) en formant des âmes de raccordement (16) dans un deuxième moule de moulage par injection, les âmes de raccordement reliant la zone des flancs (11) ainsi que la pièce appliquée sur les plaques support et la plaque centrale du matériau d'étanchéité,
(h) démoulage du bouchon de fermeture.
